# EUROPÄISCHE PATENTSCHRIFT

(11) **EP 1 794 663 B1**
(45) Veröffentlichungstag und Bekanntmachung des Hinweises auf die Patenterteilung: **21.01.2015**
(21) Anmeldenummer: 05787123.8
(22) Anmeldetag: 21.09.2005
(51) Int. Cl.: G06F 1/00, G07B 17/00, H04L 9/32, H04L 1/00

(54) **VERFAHREN UND VORRICHTUNG ZUR SIGNATURBILDUNG**
METHOD AND DEVICE FOR SIGNATURE FORMATION
PROCEDE ET DISPOSITIF DE CREATION DE SIGNATURE

(30) Priorität: 24.09.2004 DE 102004046291
(43) Veröffentlichungstag der Anmeldung: 13.06.2007
(73) Patentinhaber: ROBERT BOSCH GMBH, 70442 Stuttgart (DE)
(72) Erfinder: MUELLER, Bernd, 70839 Gerlingen (DE); HARTER, Werner, 75428 Illingen (DE); BOEHL, Eberhard, 72768 Reutlingen (DE); KOTTKE, Thomas, 71139 Ehningen (DE); COLLANI, Yorck, 71717 Beilstein (DE)
(86) Internationale Anmeldenummer: PCT/EP2005/054734
(87) Internationale Veröffentlichungsnummer: WO 2006/032682

(56) Entgegenhaltungen:
- WO-A-03/079265
- DE-A1- 10 123 169
- DE-A1- 10 252 230

## Beschreibung

### Stand der Technik

Eine gattungsgemäße Sendeeinheit und eine gattungsgemäße Empfangseinheit sind aus der DE 102 52 230 A1 bekannt. Ziel der Signaturbildung ist es dort, die Fehlermaskierungswahrscheinlichkeit der zwischen Teilnehmern des Kommunikationssystems über ein Kommunikationsmedium des Kommunikationssystems übertragenen Daten zu reduzieren.

Aus der WO 03/079265 A1 ist eine Frankiermaschine bekannt, bei der eine Hardware-Einheit vorgesehen ist, die auf Grundlage von eine zu frankierende Sendung betreffenden Daten (z.B. des Gewichts der Sendung oder der Anschrift des Empfängers) eine Signatur ermittelt. Diese ist Bestandteil eines Frankieraufdrucks der zu frankierenden Sendung bzw. eines Barcodes als Bestandteil des Frankieraufdrucks. Ziel ist es, anhand der Signatur Fälschungen des Frankieraufdrucks zu verhindern.

Aus der DE 101 23 169 A1 ist ein Verfahren zum Schutz gegen Manipulation von in einem Mikrorechnersystem gespeicherten Daten bekannt, insbesondere zur Verhinderung des sog. Chiptunings. Keine der genannten Druckschriften offenbart eine Signaturanalyse von teilnehmerintern übertragenen Daten.

Es ist bekannt, die Datenkommunikation über ein Kommunikationssystem in verteilten sicherheitsrelevanten Systemen durch Bildung einer Signatur über die zu übertragenden Daten abzusichern. Derartige sicherheitsrelevante Systeme sind beispielsweise X-by-Wire-Anwendungen, insbesondere Steer-by-Wire-, Brake-by-Wire und Shift-by-Wire-Anwendungen, in einem Kraftfahrzeug. Bei der Signaturbildung in Kommunikationssystemen werden die zu übertragenden Daten von Kommunikationseingangsbuffer zu Kommunikationsausgangsbuffer durch eine Signatur vor Übertragungsfehlern geschützt. Eine Möglichkeit der Signaturbildung ist beispielsweise der CRC (Cyclic Redundancy Check). Dieses Verfahren wird beispielsweise bei CAN (Controller Area Network), bei FlexRay und bei byteflight eingesetzt.

Das bekannte Verfahren ist jedoch nur wirksam ab dem Punkt in der Kommunikationskette, an dem die Signaturbildung erfolgt, und bis zu dem Punkt, bei dem eine Überprüfung der Signaturen stattfindet. Bei den oben genannten Systemen ist das im Sendekommunikationscontroller bzw. im Empfangskommunikationscontroller. Um Fehler in der Kommunikationskette, die vor dem Sendekommunikationscontroller oder nach dem Empfangskommunikationscontroller, das heißt zum Beispiel im Speicher des sendenden oder empfangenden Rechnergeräts (sog. Mikrocontrollers), auftreten, ebenfalls noch detektieren zu können, wird nach dem Stand der Technik bei besonders empfindlichen Daten noch eine weitere Signatur über die Daten gebildet und an die Daten angehängt, typischerweise in Form einer sogenannten Applikations-Signaturbildung (zum Beispiel in Form eines Applikations-CRC). Die Bildung und Auswertung dieser weiteren Signatur wird in Software durchgeführt, die auf dem Rechengerät der Sendeeinheit oder der Empfangseinheit des Kommunikationssystems abläuft, und ist sehr ressourcen-, das heißt rechen- und zeitintensiv. Die Bildung der weiteren Signatur stellt einen Flaschenhals dar, da die Daten von dem Rechengerät an den Kommunikationscontroller bzw. in umgekehrter Richtung von dem Kommunikationscontroller an das Rechengerät eigentlich parallel, bspw. datenelementweise, insbesondere wortweise, übermittelt werden könnten. Das heißt pro Rechentakt könnte ein Datenelement mit mehreren Bits, insbesondere ein Datenwort mit 8 Bit, übertragen werden. Aufgrund der in Software realisierten in der Regel bitweisen Signaturbildung kann ein Datenelement jedoch erst übermittelt werden, wenn alle Bits des Datenelements in die Signaturbildung einbezogen wurden, das heißt wenn mehrere Rechentakte vergangen sind.

Der vorliegenden Erfindung liegt die Aufgabe zu Grunde, die Bildung der weiteren Signatur und damit die Datenübermittlung zwischen der Rechnereinheit (dem Mikrocontroller) und dem Kommunikationscontroller der Sendeeinheit oder der Empfangseinheit zu beschleunigen beziehungsweise die Rechnereinheit (den Mikrocontroller) von dieser Aufgabe freizustellen und somit Ressourcen für andere Aufgaben freizusetzen.

Zur Lösung dieser Aufgabe wird ausgehend von der Sendeeinheit des Oberbegriffs des Anspruchs 1 vorgeschlagen, dass die Sendeeinheit eine separate Hardware-Einheit aufweist, welche zur Bildung einer weiteren Signatur zumindest über einen Teil der Daten weitestgehend unabhängig von der Rechnereinheit aufweist, die zum Zwecke einer anschließenden Übertragung über das Kommunikationsmedium von der Rechnereinheit an den Kommunikationscontroller zu übermitteln sind. Außerdem wird ausgehend von der Empfangseinheit des Oberbegriffs des Anspruchs 5 vorgeschlagen, dass die Empfangseinheit eine separate Hardware-Einheit aufweist, welche zur Bildung einer weiteren Signatur zumindest über einen Teil der von dem Kommunikationscontroller empfangenen Daten weitestgehend unabhängig von der Rechnereinheit aufweist, die zur Weiterverarbeitung von dem Kommunikationscontroller an die Rechnereinheit zu übermitteln sind.

### Vorteile der Erfindung

Die vorliegende Erfindung erleichtert die Bildung der weiteren Signatur für Daten, die zwischen der Rechnereinheit (dem Mikrocontroller bzw. der Central Processing Unit, CPU) und dem Kommunikationscontroller einer Sendeeinheit oder einer Empfangseinheit eines Kommunikationssystems übermittelt werden. Das Rechengerät übermittelt diejenigen Daten, über die eine weitere Signatur gebildet werden soll, einfach an die Hardware zur Signaturbildung und kann sich wieder anderen Aufgaben zuwenden. Die eigentliche Signaturbildung wird dann von der Hardware unabhängig von dem Rechengerät erledigt. Die Hardware zur Signaturbildung muss von dem Rechengerät aus angesprochen, das heißt mit zu signierenden Daten versorgt und aktiviert, werden können.

Das erfindungsgemäße Verfahren betrifft die rechnerinterne Kommunikation in der Empfangseinheit und in der Sendeeinheit eines Kommunikationssystems. Die Datenübertragung über das Kommunikationsmedium ist sowieso recht langsam, so dass es nicht auffällt oder stört, wenn für die Signaturbildung im Rahmen der Datenübertragung mehrere Rechentaktzyklen erforderlich sind. Bei der wesentlich schnelleren rechnerinternen Kommunikation ist dies jedoch anders. Dort kann die Signaturbildung einen echten Flaschenhals darstellen, da die Kommunikation deutlich weniger Rechentakte benötigt als die herkömmliche softwaremäßig realisierte Signaturbildung. Hier kann die vorliegende Erfindung Abhilfe schaffen.

Die Hauptvorteile der Erfindung liegen in einer Entlastung des Rechengeräts von der umfangreichen Aufgabe, regelmäßig eine Signatur bilden zu müssen. Außerdem kann eine in Hardware realisierte Signaturbildungsvorrichtung mit einem deutlich geringeren Aufwand und wesentlich einfacher realisiert werden als dies mittels Software möglich wäre. Die Hardware zur Signaturbildung kann problemlos auf ordnungsgemäße Funktion überwacht werden. Die Hardware kann sowohl zum Überwachen der Kommunikationspfade innerhalb eines Kommunikationssystems als auch zur Absicherung beliebiger anderer Daten innerhalb des Kommunikationssystems eingesetzt werden. Schließlich bietet die erfindungsgemäße Hardware zur Signaturbildung die Möglichkeit, eine sonst nur schwer zu überwachende Schnittstelle (zum Beispiel einen SPI (Serial Peripheral Interface) Bus) zu überwachen.

Ein weiterer Vorteil der Erfindung besteht darin, dass diese Hardware zur Signaturbildung durch Software leicht prüfbar ist. Um eine Prüfung durchzuführen, wird mittels Software oder mittels einer Prüfhardware die Signatur über Testdaten berechnet und das Ergebnis der Berechnung mit dem Ausgang der Hardware zur Signaturbildung verglichen.

Vorzugsweise wird die Signatur noch vor Beginn der Datenübermittlung zwischen der Rechnereinheit und dem Kommunikationscontroller gebildet und ablegt. Außerdem wird die Signatur vorzugsweise ohne Einsatz der Rechnereinheit gebildet und ablegt. Das heißt, dass die Rechnereinheit der Sendeeinheit oder der Empfangseinheit des Kommunikationssystems von der Signaturbildung freigestellt ist und für andere Aufgaben zur Verfügung steht.

Gemäß einer vorteilhaften Weiterbildung der Erfindung wird vorgeschlagen, dass die Vorrichtung als ein Schieberegister mit mehreren Eingängen ausgebildet ist. Ein solches Schieberegister wird auch als Multiple Input Shift Register (MISR) bezeichnet.

Vorzugsweise ist die Vorrichtung als eine separate Hardware-Einheit der Sendeeinheit oder der Empfangseinheit ausgebildet. Diese separate Hardware-Einheit ist - im Gegensatz zu bekannten CRC-Logiken, die in Kommunikationscontrollern eingesetzt werden - durch das Rechengerät direkt ansprechbar. Falls das Rechengerät bzw. die darauf ablaufende Software zu dem Ergebnis kommt, dass ein bestimmtes Datenelement mit einer Signatur versehen werden sollte, wird dieses Datenelement an die Hardware-Einheit zur Signaturbildung übergeben. Nach einer bereits vorab bekannten Zeit kann das Ergebnis der Signaturbildung wieder abgeholt werden. Das Rechengerät ist also nahezu vollständig entlastet. Unter Umständen kann die Signaturbildung durch die spezialisierte Hardware so schnell erfolgen, dass das Rechengerät die Ergebnisbildung nach der Übergabe der Daten abwarten kann. Dies hängt insbesondere von der zu signierenden Datenmenge, von dem verwendeten Signaturverfahren und von der Art der Hardware-Einheit ab. Ein Warten auf die signierten Daten ist aber nicht notwendig und der Vorteil der erfindungsgemäßen Hardware-Einheit kann insbesondere auch dann genutzt werden, wenn sich das Rechengerät während der Signaturbildung anderen Aufgaben zuwendet.

Mit der vorliegenden Erfindung kann ein viel größerer Teil des Pfades abgesichert werden als es für das Kommunikationsprotokoll selbst möglich wäre. Der Empfänger der Daten (das kann auch das gleiche Rechengerät sein) kann die Daten prüfen indem er die eigene Signatur über die Daten bildet und mit der gesendeten Signatur vergleicht. Ungleichheit signalisiert einen Fehler. Die Art der Signatur ist zunächst nicht vorgegeben. Eine Möglichkeit ist der Cyclic Redundancy Check (CRC). Ein Vorteil des CRC ist die allgemeine Bekanntheit und die skalierbare Einstellung der Hamming Distanz. Eine weitere Alternative ist der Einsatz eines Multiple Input Shift Registers (MISR) oder sogar ein verbessertes MISR, wie es beispielsweise aus der DE 103 51 442 A1 bekannt ist. Wichtig ist natürlich, dass der Empfänger der signierten Daten die genauen Mechanismen zur Signaturbildung beim Sender kennt und ebenfalls anwendet.

Vorteilhafterweise erfolgt die Übergabe der zu signierenden Daten von dem Rechengerät an die Hardware-Einheit über einen DMA (Direct Memory Access)-Controller oder einen ähnlichen Mechanismus. Das heißt der Hardware-Einheit wird nur Anfang und Ende eines Speicherbereichs mitgeteilt, in dem die zu signierenden Daten abgelegt sind. Die Signatur kann in einem anderen Speicherbereich abgelegt werden. Ein besonderer Vorteil dieser Lösung ist, dass aus Sicht des Rechengeräts die Schnittstelle (das Interface) der zusätzlichen Hardware-Einheit wie das eines DMA-Controllers aussieht. Es sind dann keine speziellen Assemblerbefehle neu zu erschaffen.

Es ist denkbar, dass die zusätzliche Hardware-Einheit ein "Fertig"-Signal ausgibt, sobald die Signaturbildung fertig ist. Die Hardware-Einheit kann auch so ausgelegt sein, dass sie auf den Speicher entweder über den gleichen Daten- und Adressbus wie das Rechengerät oder in Form eines Dual Port RAMSs (Random Access Memorys) direkt zugreifen kann.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Kommunikationssystem mit einer erfindungsgemäßen Sendeeinheit und einer erfindungsgemäßen Empfangseinheit gemäß einer bevorzugten Ausführungsform der Erfindung; und
- Figur 2: eine erfindungsgemäße Hardware-Einheit zur Signaturbildung gemäß einer bevorzugten Ausführungsform; und
- Figur 3: eine erfindungsgemäße Hardware-Einheit zur Signaturbildung gemäß einer bevorzugten Ausführungsform.

### Beschreibung der Ausführungsbeispiele

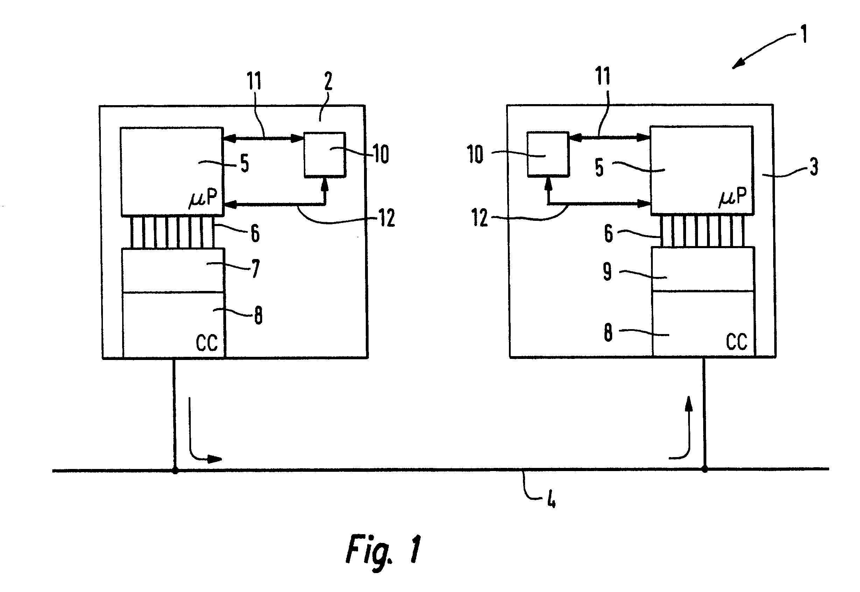

In Figur 1 ist ein erfindungsgemäßes Kommunikationssystem in seiner Gesamtheit mit dem Bezugszeichen 1 bezeichnet. Das Kommunikationssystem umfasst zwei Teilnehmer, eine Sendeeinheit 2 und eine Empfangseinheit 3. Zwischen der Sendeeinheit 2 und der Empfangseinheit 3 können Daten über ein Kommunikationsmedium 4, das beispielsweise als ein Datenbus ausgebildet ist, ausgetauscht werden. Jeder der Teilnehmer 2, 3 umfasst ein Rechengerät 5, das beispielsweise als ein Mikroprozessor ausgebildet ist und auch als Central Processing Unit (CPU) bezeichnet wird. Das Rechengerät 5 der Sendeeinheit 2 übermittelt Daten, die über das Kommunikationsmedium 4 an die Empfangseinheit 3 übertragen werden sollen, über mehrere Parallelleitungen 6, im vorliegenden Ausführungsbeispiel über acht Leitungen, an einen Ausgangspuffer 7 eines Kommunikationscontrollers 8. Der Kommunikationscontroller 8 der Empfangseinheit 3 übermittelt von dem Kommunikationsmedium 4 empfangene Daten über einen Eingangspuffer 9 und Parallelleitungen 6 an das Rechengerät 5 zur Weiterverarbeitung.

Zur Absicherung der Datenübertragung über das Kommunikationsmedium 4 ist es bekannt, die zu übertragenden Daten zu signieren. Für das Signieren der Daten ist der Kommunikationscontroller 8 zuständig. Da die Datenübertragung über das Kommunikationsmedium 4 sowieso relativ langsam erfolgt, führt die Signaturbildung in dem Kommunikationscontrollern 8 zu keiner Verzögerung.

Anders sieht es jedoch rechnerintern aus. Auch die zwischen dem Rechengerät 5 und dem Kommunikationscontroller 8 übertragenen Daten sollten in einigen Anwendungen zumindest teilweise durch eine Signaturbildung abgesichert werden. Die Datenübermittlung zwischen dem Rechengerät 5 und dem Kommunikationscontroller erfolgt datenelementweise, insbesondere wortweise. Das heißt es werden immer alle acht Bit eines Datenwortes parallel über die Leitungen 6 übertragen. Deshalb sind für die Datenübermittlung nur wenige Rechentakte erforderlich. Wenn die Signaturbildung langsamer als die Datenübermittlung, beispielsweise bitweise, erfolgt, stellt die Signaturbildung einen Flaschenhals dar, der die Datenrate des gesamten Kommunikationssystems 1 beeinträchtigen kann. Genau hier setzt die vorliegende Erfindung an.

Erfindungsgemäß wird die Signaturbildung der zwischen dem Rechengerät 5 und dem Ausgangsbuffer 7 bzw. dem Eingangsbuffer 9 des Kommunikationscontrollers 8 übermittelten Daten hardwaremäßig realisiert. Dazu ist eine separate Hardware-Einheit 10 vorgesehen, welche die Signaturbildung weitestgehend unabhängig von dem Rechengerät 5 durchführt. Die Hardware-Einheit 10 ist über eine Signalleitung 11 von dem Rechengerät 5 direkt ansteuerbar. Über die Signalleitung 11 kann zum einen die Hardware-Einheit 10 aktiviert werden. Zum anderen ist es aber auch möglich, dass die Hardware-Einheit 10 über die Leitung 11 ein "Fertig"-Signal an das Rechengerät 5 übermittelt, sobald sie mit der Signaturbildung fertig ist. Außerdem hat die Hardware-Einheit 10 Zugriff auf die zu signierenden Daten. Es ist denkbar, dass die Hardware-Einheit 10 die zu signierenden Daten über eine Datenleitung 12 von dem Rechengerät 5 erhält. Die Übermittlung der zu signierenden Daten an die Hardware-Einheit 10 kann von dem Rechengerät 5 ausgeführt werden. Es ist aber auch denkbar, dass sich die Hardware-Einheit 10 die zu signierenden Daten (unter Umständen auf Befehl des Rechengeräts 5) selbstständig abholt. Es ist denkbar, dass die Kommunikation rechnerintern erfolgt (nicht dargestellt). In diesem Fall wären die Teilnehmer 2, 3 aus Figur 1 identisch, das heißt als die gleiche Einheit, ausgebildet.

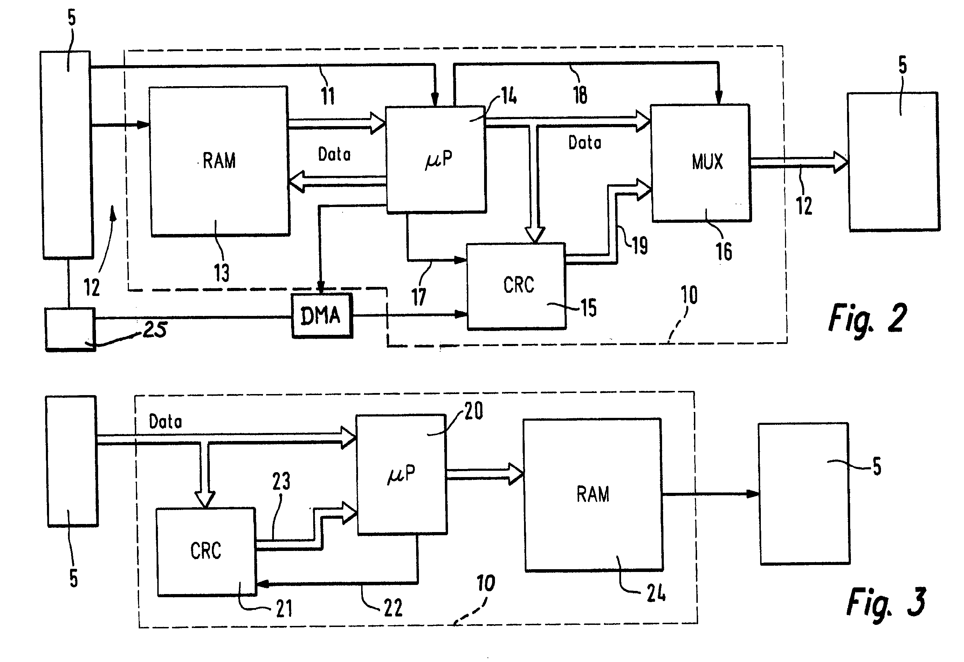

In Figur 2 ist eine erfindungsgemäße Hardware-Einheit 10' gemäß einer bevorzugten Ausführungsform dargestellt. Die Hardware-Einheit 10' ist Teil der Sendeeinheit 2 des Kommunikationssystems 1. Die zu signierenden Daten werden von dem Rechengerät 5 über die Datenleitung 12 in einem Speicher 13 der Hardware-Einheit 10 abgelegt. Auf diesen Speicher 13 hat ein Rechengerät 14 Zugriff und kann die Daten auslesen.

Das Rechengerät 14 erhält zu einem gegebenen Zeitpunkt über die Signalleitung 11 ein Signal von dem Rechengerät 5 der Sendeeinheit 2, mit der Signaturbildung zu beginnen. Das Rechengerät 14 holt die zu signierenden Daten aus dem Speicher 13 und leitet sie weiter an eine Einheit 15 zur Signaturbildung und an einen Multiplexer 16. In dem dargestellten Beispiel berechnet die Einheit 15 den CRC. Alternativ kann die Einheit 15 auch als ein MISR ausgebildet sein.

Statt des Speichers 13 kann auch ein DMA-Controller eingesetzt werden, der über einen DMA-Zugriff die Daten aus dem Speicher, der beispielsweise als ein RAM (Random-Access-Memory) ausgebildet ist, eines Chips 25 holt und an die Einheit 15 zur Signaturbildung weiterleitet. Dazu muss jedoch von dem Rechengerät 14 der entsprechende Speicherbereich des Speichers des Chips 25 bezeichnet werden, so dass der DMA-Controller auf den richtigen Speicherbereich zugreift. Noch günstiger ist es, bei der Übermittlung bzw. dem Empfang der Daten den Anfang und das Ende des relevanten Datenbereichs so zu kennzeichnen und von dem Rechengerät 5 an die Hardware-Einheit 10 zu übermitteln, dass die Signatur automatisch während des Sendens oder Empfangs der Daten parallel gebildet wird.

Die Einheit 15 wird über eine Signalleitung 17 von dem Rechengerät 14 angesteuert. Sie verknüpft mehrere Datenbytes oder Datenworte nacheinander zur Signaturbildung. Außerdem steuert das Rechengerät 14 über eine weitere Signalleitung 18 den Multiplexer 16 an. Am Ausgang der Einheit 15 liegt die Signatur der Daten an und wird über eine Datenleitung 19 an den Multiplexer 16 weitergeleitet. Dieser bindet die Signatur in die Daten ein und sendet beides über die Datenleitung 12 wieder zurück an das Rechengerät 5. Die Signatur muss nicht in die gleiche Nachricht wie die Daten eingebunden werden. Es wäre auch denkbar, dass die Signatur alleine oder die signierten Daten wieder in einen speziellen Speicherbereich des Speichers 13 geschrieben werden, von wo aus sie von dem Rechengerät 5 abgeholten werden können.

Die Signaturbildung in der Hardware-Einheit 10 erfolgt also völlig selbstständig und nahezu ohne Belastung des Rechengeräts 5 der Sendeeinheit 2. Während der Bildung der Signatur kann das Rechengerät 5 also andere Aufgabe erfüllen.

Die signierten Daten werden dann von dem Rechengerät 5 über die Parallelleitungen 6 an den Ausgangsbuffer 7 des Kommunikationscontrollers 8 übermittelt. Von dort aus werden sie über das Kommunikationsmedium 4 an die Empfangseinheit 3 übertragen. Eine erfindungsgemäße Hardware-Einheit 10 für die Empfangseinheit 3 ist in Figur 3 im Detail dargestellt. Die Empfangseinheit 3 empfängt die signierten Daten von dem Kommunikationsmedium 4 über den Kommunikationscontroller 8 und leitet sie über den Eingangspuffer 9 und die Parallelleitung weiter an das Rechengerät 5.

In dem Rechengerät 5 werden die Daten ohne Signatur aus den empfangenen Informationen extrahiert. Die Daten werden an ein weiteres Rechengerät 20 der Empfangseinheit 3 sowie an eine Einheit 21 zur Signaturbildung weitergeleitet. Die Einheit 21 verwendet zur Signaturbildung den gleichen Algorithmus und die gleichen Daten wie die Einheit 15 in der Sendeeinheit 2. Die Einheit 21 wird von dem Rechengerät 20 über eine Signalleitung 22 angesteuert. Die von der Einheit 21 gebildete weitere Signatur wird über eine Datenleitung 23 an das Rechengerät 20 übermittelt. Das Rechengerät 20 legt die empfangenen Daten, die von der Einheit 15 ermittelte Signatur und die von der Einheit 21 ermittelte weitere Signatur in einem Speicher 24 ab. Das Rechengerät 5 der Empfangseinheit 3 kann auf den Speicher 24 zugreifen und die dort abgelegten Informationen abrufen.

Ein auf dem Rechengerät 5 ablaufendes Programm führt dann einen Vergleich der beiden Signaturen durch und veranlasst bei einem Abweichen der beiden Signaturen von einander geeignete Maßnahmen, um zu verhindern, dass fehlerhafte Daten beim Empfänger 3 weiter verarbeitet werden. Eine mögliche Maßnahme besteht beispielsweise in einer erneuten Übertragung der fehlerhaften Daten.

Selbstverständlich müssen nicht alle über das Kommunikationsmedium 4 zu übertragenden Daten mittels des erfindungsgemäßen Verfahrens signiert werden. Vielmehr entscheidet beispielsweise eine auf dem Rechengerät 5 ablaufende Software, welche Daten vor der Übermittlung von dem Rechengerät 5 an den Kommunikationscontroller 8 signiert werden sollen. In der Regel wird man dies für besonders sicherheitsrelevante Daten in Betracht ziehen. Denkbar ist es außerdem, dass zusätzlich zu der beschriebenen Signatur eine weitere Signaturbildung über alle Daten ausgeführt wird, bevor sie über das Kommunikationsmedium 4 übertragen werden. In der Empfangseinheit 3 wird dann zunächst anhand der über alle Daten ausgeführten Signatur überprüft, ob die Daten fehlerfrei über das Kommunikationsmedium 4 übertragen wurden. Danach wird anhand der durch die Hardware-Einheit 10 ausgeführten Signatur überprüft, ob die sicherheitsrelevanten Daten darüber hinaus auch fehlerfrei zwischen Rechengerät 5 und Kommunikationscontroller 8 übertragen wurden.

## Patentansprüche

1. Sendeeinheit (2) eines Kommunikationssystems (1), umfassend eine Rechnereinheit (5) und einen Kommunikationscontroller (8), über den die Sendeeinheit (2) zum Zwecke der Datenübertragung mit einem Kommunikationsmedium (4) in Verbindung steht, wobei die Sendeeinheit (2) Mittel zum Signieren von durch den Kommunikationscontroller (8) über das Kommunikationsmedium (4) zu übertragenden Daten mittels einer ersten Signatur aufweist, **dadurch gekennzeichnet, dass** die Sendeeinheit (2) eine separate Hardware-Einheit (10) aufweist, welche zur Bildung einer weiteren Signatur zumindest über einen Teil der Daten weitestgehend unabhängig von der Rechnereinheit (5) aufweist, die zum Zwecke einer anschließenden Übertragung über das Kommunikationsmedium (4) von der Rechnereinheit (5) an den Kommunikationscontroller (8) zu übermitteln sind.

2. Sendeeinheit (2) nach Anspruch 1, **dadurch gekennzeichnet, dass** die Hardware-Einheit (10) die Signatur noch vor Beginn der Datenübermittlung zwischen der Rechnereinheit (5) und dem Kommunikationscontroller (8) bildet und ablegt.

3. Sendeeinheit (2) nach Anspruch 1 oder 2, **dadurch gekennzeichnet, dass** die Hardware-Einheit (10) die Signatur ohne Einsatz der Rechnereinheit (5) bildet und ablegt.

4. Sendeeinheit (2) nach einem der Ansprüche 1 bis 3, **dadurch gekennzeichnet, dass** die Hardware-Einheit (10) als ein Schieberegister mit mehreren Eingängen ausgebildet ist.

5. Empfangseinheit (3) eines Kommunikationssystems (1), umfassend eine Rechnereinheit (5) und einen Kommunikationscontroller (8), über den die Empfangseinheit (2) zum Zwecke der Datenübertragung mit einem Kommunikationsmedium (4) in Verbindung steht, wobei die Empfangseinheit (3) Mittel zum Überprüfen einer ersten Signatur von über das Kommunikationsmedium (4) übertragenen und von dem Kommunikationscontroller (8) empfangenen Daten aufweist, **dadurch gekennzeichnet, dass** die Empfangseinheit (3) eine separate Hardware-Einheit (10) aufweist, welche zur Bildung einer weiteren Signatur zumindest über einen Teil der von dem Kommunikationscontroller (8) empfangenen Daten weitestgehend unabhängig von der Rechnereinheit (5) aufweist, die zur Weiterverarbeitung von dem Kommunikationscontroller (8) an die Rechnereinheit (5) zu übermitteln sind.

6. Empfangseinheit (3) nach Anspruch 5, **dadurch gekennzeichnet, dass** die Hardware-Einheit (10) die Signatur noch vor Beginn der Datenübermittlung zwischen der Rechnereinheit (5) und dem Kommunikationscontroller (8) bildet und ablegt.

7. Empfangseinheit (3) nach Anspruch 5 oder 6, **dadurch gekennzeichnet, dass** die Hardware-Einheit (10) die Signatur ohne Einsatz der Rechnereinheit (5) bildet und ablegt.

8. Empfangseinheit (3) nach einem der Ansprüche 5 bis 7, **dadurch gekennzeichnet, dass** die Hardware-Einheit (10) als ein Schieberegister mit mehreren Eingängen ausgebildet ist.

## Claims

1. Transmission unit (2) for a communication system (1), comprising a computer unit (5) and a communication controller (8) by means of which the transmission unit (2) is connected to a communication medium (4) for the purpose of data transmission, wherein the transmission unit (2) has means for signing, by means of a first signature, data that are to be transmitted by the communication controller (8) via the communication medium (4), **characterized in that** the transmission unit (2) has a separate hardware unit (10) that is designed to form a further signature, as far as possible independently of the computer unit (5), by means of at least some of the data that need to be transmitted from the computer unit (5) to the communication controller (8) for the purpose of subsequent transmission via the communication medium (4).

2. Transmission unit (2) according to Claim 1, **characterized in that** the hardware unit (10) forms and stores the signature even before the beginning of the data transmission between the computer unit (5) and the communication controller (8).

3. Transmission unit (2) according to Claim 1 or 2, **characterized in that** the hardware unit (10) forms and stores the signature without the use of the computer unit (5).

4. Transmission unit (2) according to one of Claims 1 to 3, **characterized in that** the hardware unit (10) is in the form of a shift register having a plurality of inputs.

5. Reception unit (3) for a communication system (1), comprising a computer unit (5) and a communication controller (8) by means of which the reception unit (2) is connected to a communication medium (4) for the purpose of data transmission, wherein the reception unit (3) has means for checking a first signature from data transmitted via the communication medium (4) and received from the communication controller (8), **characterized in that** the reception unit (3) has a separate hardware unit (10) that is designed to form a further signature, as far as possible independently of the computer unit (5), by means of at least some of the data received from the communication controller (8), that need to be transmitted from the communication controller (8) to the computer unit (5) for the purpose of further processing.

6. Reception unit (3) according to Claim 5, **characterized in that** the hardware unit (10) forms and stores the signature even before the beginning of the data transmission between the computer unit (5) and the communication controller (8).

7. Reception unit (3) according to Claim 5 or 6, **characterized in that** the hardware unit (10) forms and stores the signature without the use of the computer unit (5).

8. Reception unit (3) according to one of Claims 5 to 7, **characterized in that** the hardware unit (10) is in the form of a shift register having a plurality of inputs.

## Revendications

1. Unité d'émission (2) d'un système de communication (1), comprenant une unité de calcul (5) et un contrôleur de communication (8) par l'intermédiaire duquel l'unité d'émission (2) est connectée à un support de communication (4) à des fins de transmission de données, dans laquelle l'unité d'émission (2) comporte des moyens destinés à signer des données devant être transmises par le contrôleur de communication (8) par l'intermédiaire du support de communication (4) au moyen d'une première signature, **caractérisée en ce que** l'unité d'émission (2) comporte une unité matérielle séparée (10) qui est conçue pour construire une autre signature d'une manière pratiquement indépendante de l'unité de calcul (5) par l'intermédiaire d'au moins une partie des données qui doivent être transmises afin qu'elles soient ensuite transmises par l'intermédiaire du support de communication (4) par l'unité de calcul (5) au contrôleur de communication (8).

2. Unité d'émission (2) selon la revendication 1, **caractérisée en ce que** l'unité matérielle (10) construit et stocke la signature avant le début de la transmission de données entre l'unité de calcul (5) et le contrôleur de communication (8).

3. Unité d'émission (2) selon la revendication 1 ou 2, **caractérisée en ce que** l'unité matérielle (10) construit et stocke la signature sans intervention de l'unité de calcul (5).

4. Unité d'émission (2) selon l'une quelconque des revendications 1 à 3, **caractérisée en ce que** l'unité matérielle (10) est réalisée sous la forme d'un registre à décalage à plusieurs entrées.

5. Unité de réception (3) d'un système de communication (1), comprenant une unité de calcul (5) et un contrôleur de communication (8) par l'intermédiaire duquel l'unité de réception (2) est connectée à un support de communication (4) à des fins de transmission de données, dans laquelle l'unité de réception (3) comporte des moyens destinés à vérifier une première signature de données transmises par l'intermédiaire du support de communication (4) et reçues par le contrôleur de communication (8), **caractérisée en ce que** l'unité de réception (3) comporte une unité matérielle séparée (10) qui est conçue pour construire une autre signature d'une manière pratiquement indépendante de l'unité de calcul (5) par l'intermédiaire d'au moins une partie des données reçues par le contrôleur de communication (8), lesquelles données doivent être transmises en vue d'un traitement supplémentaire par le contrôleur de communication (8) à l'unité de calcul (5).

6. Unité de réception (3) selon la revendication 5, **caractérisée en ce que** l'unité matérielle (10) construit et stocke la signature avant le début de la transmission de données entre l'unité de calcul (5) et le contrôleur de communication (8).

7. Unité de réception (3) selon la revendication 5 ou 6, **caractérisée en ce que** l'unité matérielle (10) construit et stocke la signature sans intervention de l'unité de calcul (5).

8. Unité de réception (3) selon l'une quelconque des revendications 5 à 7, **caractérisée en ce que** l'unité matérielle (10) est réalisée sous la forme d'un registre à décalage à plusieurs entrées.
